(19) Europäisches Patentamt
European Patent Office
Office européen des brevets

(11) **EP 4 455 557 A1**

(12) **EUROPEAN PATENT APPLICATION**

(43) Date of publication:
**30.10.2024 Bulletin 2024/44**

(21) Application number: **23182058.0**

(22) Date of filing: **28.06.2023**

(51) International Patent Classification (IPC):
**F24C 7/08** (2006.01)    **A47J 37/06** (2006.01)
**F24C 15/16** (2006.01)

(52) Cooperative Patent Classification (CPC):
**F24C 15/16; A47J 36/32; F24C 7/085**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2023 PCT/CN2023/091256**

(71) Applicant: **Versuni Holding B.V.**
**5656 AE Eindhoven (NL)**

(72) Inventors:
• **XU, Bo Jian**
 **5656 AE Eindhoven (NL)**
• **XIAO, Weimin**
 **5656 AE Eindhoven (NL)**
• **SUN, Wen**
 **5656 AE Eindhoven (NL)**

(74) Representative: **Vollering, Stefanus Franciscus Maria**
**Versuni Holding B.V.**
**High Tech Campus 42**
**5656 AE Eindhoven (NL)**

(54) **FOOD REDISTRIBUTION**

(57) In an embodiment, a computer-implemented method (100) of monitoring a cooking process implemented by a cooking apparatus is described. The method comprises receiving (102) a dataset indicative of an appearance of food undergoing the cooking process, wherein the dataset is derived from image data corresponding to a view of the food undergoing the cooking process. The food in the view maps to a set of pixels in the image data. A set of image parameter values derived from the set of pixels represent a range of lightness levels. The method further comprises determining (104): a first value representative of a first subset of the image parameter values; and a second value representative of a second subset of the image parameter values. The first subset comprises the image parameter values in a highest sub-range of lightness levels in the range of lightness levels. The second subset comprises the image parameter values in a lowest sub-range of lightness levels in the range of lightness levels. The method further comprises, in response to a difference parameter calculated based on a difference between the first value and the second value crossing a threshold indicative of the food having a non-uniform surface appearance as a result of the cooking process, indicating (106) that a moveable element of the cooking apparatus is to move to cause redistribution of the food with respect to the moveable element.

100

**FIG. 1**

## EP 4 455 557 A1

**Description**

TECHNICAL FIELD OF THE INVENTION

The invention relates to a computer-implemented method of monitoring a cooking process implemented by a cooking apparatus, a non-transitory machine-readable medium and the cooking apparatus.

BACKGROUND OF THE INVENTION

Certain food types may have different browning speeds in different regions of the food. Hence, some foods may have a degree of non-uniformity in terms of browning across the surface of the food. This effect can be ascribed to an intrinsic property of the food such as its shape or non-uniform temperature distribution within the cooking region. Consumers may therefore need to actively pause the cooking apparatus after a period of time to check the status of the food surface and take remedial action. This approach requires intervention by the user and relies on personal experience on specific food types and cooking apparatus. However, user intervention may not be reliable because of various factors, such as food amount, food freshness, seasonings and toppings, and food relative position on the cooking surface.

SUMMARY OF THE INVENTION

Certain aspects or embodiments described herein relate to an improved approach for monitoring a cooking process implemented by a cooking apparatus. Certain aspects or embodiments may reduce or obviate certain problems associated with achieving a specified level of uniformity in terms of the surface appearance of the food.

In a first aspect, a computer-implemented method of monitoring a cooking process implemented by a cooking apparatus is described. The method comprises receiving a dataset indicative of an appearance of food undergoing the cooking process. The dataset is derived from image data corresponding to a view of the food undergoing the cooking process. The food in the view maps to a set of pixels in the image data. A set of image parameter values derived from the set of pixels represent a range of lightness levels. The method further comprises determining a first value representative of a first subset of the image parameter values. The first subset comprises the image parameter values in a highest sub-range of lightness levels in the range of lightness levels. The method further comprises determining a second value representative of a second subset of the image parameter values. The second subset comprises the image parameter values in a lowest sub-range of lightness levels in the range of lightness levels. The method further comprises, in response to a difference parameter calculated based on a difference between the first value and the second value crossing a threshold indicative of the food having a non-uniform surface appearance as a result of the cooking process, indicating that a moveable element of the cooking apparatus is to move to cause redistribution of the food with respect to the moveable element.

In a second aspect, a non-transitory machine-readable medium is described. The non-transitory machine-readable medium stores instructions readable and executable by a processor to implement the method of the first aspect.

In a third aspect, a cooking apparatus for implementing a cooking process is described. The cooking apparatus comprises a cooking chamber for receiving food; a housing defining the cooking chamber; an air circulation system for circulating air flow inside the cooking chamber; a camera for capturing images during the cooking process; a moveable element for moving the food; and a controller. The controller is configured to implement the method of the first aspect.

Certain aspects or embodiments described herein may provide various technical benefits. For example, certain embodiments may provide improved monitoring to facilitate a reduction in non-uniformity in terms of browning across the surface of the food during the cooking process. Further, certain embodiments may facilitate enhanced control over the cooking process to reduce non-uniformity in terms of browning. Further, certain embodiments may improve user convenience e.g., by reducing user monitoring and/or intervention during a cooking process. Further, certain embodiments may provide a low computational complexity approach to evaluating food browning.

These and other aspects of the invention will be apparent from and elucidated with reference to the embodiment(s) described hereinafter.

BRIEF DESCRIPTION OF DRAWINGS

Exemplary embodiments of the invention will now be described, by way of example only, with reference to the following drawings, in which:

FIG. 1 refers to a method of monitoring a cooking process implemented by a cooking apparatus according to an embodiment;
FIG. 2 is a schematic drawing of a cooking ecosystem according to an embodiment;

FIG. 3 is a schematic drawing of a cooking apparatus for implementing a cooking process according to an embodiment;

FIG. 4 is a schematic representation of a set of images of food that has been cooked to various degrees according to an embodiment;

FIG. 5 refers to a method of monitoring a cooking process implemented by a cooking apparatus according to some embodiments;

FIG. 6 is a graph depicting experimental data providing a difference parameter according to an embodiment;

FIG. 7 is a schematic drawing of a machine-readable medium for implementing various embodiments; and

FIG. 8 is a schematic drawing of apparatus for implementing various embodiments.

DETAILED DESCRIPTION OF THE EMBODIMENTS

As described previously, certain foods may develop non-uniform surface browning as a result of a cooking process. This effect can be observed in some cooking apparatus such as an air fryer. For example, when cooking potatoes fries, some regions of the fries may become more brown than other regions of the fries as a result of the cooking speed being different in the different regions. Multiple factors may affect the level of browning non-uniformity such as cooking temperature, type and design of the cooking apparatus, position and quantity of the food, the type of food, the initial temperature state of the food, etc. At present, a user needs to intervene to reduce the browning non-uniformity. For example, the user may interrupt the cooking process, visually check the food for non-uniform browning, potentially turn the food over and then continue the cooking process. This may be considered to be inconvenient for the user and is subject to the user's skill and/or availability to regularly check the food during the cooking process.

Therefore, an improved approach for dealing with non-uniform browning of food is needed.

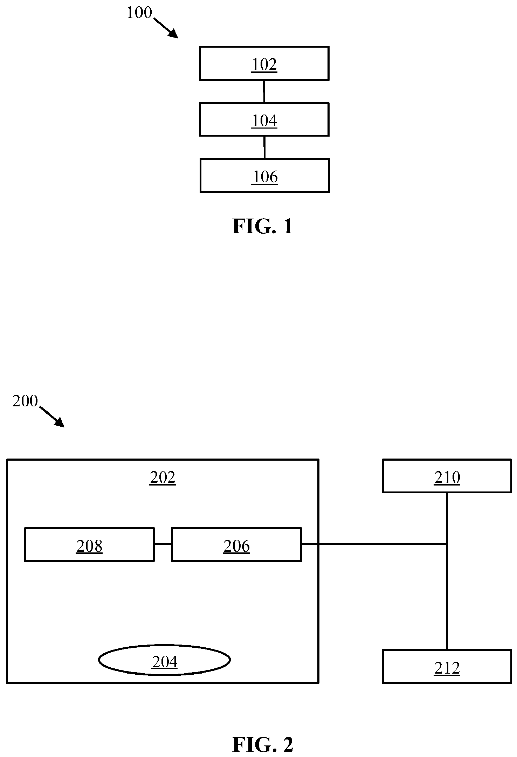

FIG. 1 refers to a computer-implemented method 100 of monitoring a cooking process implemented by a cooking apparatus according to an embodiment. An example of such a cooking apparatus is described in more detail below.

As referred to herein, a "cooking process" refers to the process of applying heat to food to cause a change in the food. Such application of heat may result in a mere warming of the food, or a more substantial change in the food such as may be achieved by using cooking methods such as baking, roasting, grilling, frying, air frying, etc.

As referred to herein, a "cooking apparatus" refers to any device capable of applying heat to food, to perform the cooking process as referred to above. Heat may be applied to the food by the cooking apparatus in one or multiple ways such as by conduction, convection and/or radiation. Examples of cooking apparatus include: an oven, microwave oven, hob, air fryer, etc.

The method 100 may be implemented by, for example, a processor of the cooking apparatus or another entity comprising a processor, as described in more detail below.

The method 100 comprises, at block 102, receiving a dataset indicative of an appearance of food undergoing the cooking process. The dataset is derived from image data corresponding to a view of the food undergoing the cooking process. The food in the view maps to a set of pixels in the image data. A set of image parameter values derived from the set of pixels represent a range of lightness levels.

The food may be a single item of food or multiple items of food.

The following section provides further details of the image data referred to above, after which further details of the method 100 are described.

Image data may be acquired during the cooking process e.g., using a camera as described in more detail below. The image data corresponds to a view of the food at a certain time during the cooking process. Multiple image data (e.g., multiple frames) may be acquired during the course of the cooking process. The view of the food may refer to a field of view of the camera used to acquire the image.

In some cases, the image data may be raw imaging data provided by the camera. For example, the received image data may not be subject to any image processing and may be in the same format output by the circuitry of the camera). In some cases, the image data may be processed (e.g., processed from the raw format, compressed, or otherwise modified by the circuitry of the camera or any other available processing circuitry).

In some cases, the image data may indicate red-green-blue (RGB) values (or another color space) for each pixel of the image data. In some cases, the image data may be in a different color space such as the International Commission on Illumination (CIE) L*a*b* (CILAB) color space. In some cases, the image data may be in a different color space such as the hue-saturation-value (HSV) color space. The CIELAB and HSV color spaces (among similar types of color spaces) may be more convenient than the RGB color space for certain operations such as certain segmentation operations, as described below.

Image parameter values (e.g., RGB values, LAB values, HSV values, etc.) derived from the image data may refer to values that can be used to represent what is observed in the view in terms of lightness/darkness, color, etc. For example, a set of pixels of the camera may register the observed intensity at each pixel of the camera, where each pixel maps to a location in the view. Thus, the pixel intensity registered by the set of pixels may represent the observed view in terms of lightness and/or color. Thus, an image parameter value may refer to a pixel intensity value (e.g., from the raw image data) or an image processed value such as a color coordinate in a color space.

The dataset is therefore indicative of the appearance of food, at least in terms of lightness. Lightness refers to the perceived reflectance of the food (e.g., as observed by a camera). Other terms such as "intensity" could be used to represent the detected lightness. Lightness may be represented in a number of different ways. For example, the L*-axis of the CIELAB color space may be indicative of lightness in a range of 0 to 100. An L* value of 100 indicates that the value measured by the pixel is a lightest possible value (and corresponds to white). An L* value of 0 indicates that the value measured by the pixel is a darkest possible value (and corresponds to black). In another example, the RGB color space may indicate lightness (for a particular color) via a pixel intensity value in a range between 0 to 255. A pixel intensity value of 255 indicates that the intensity of the color measured by the pixel is at the highest level detectable by the pixel. A pixel intensity value of 0 indicates that the intensity of the color measured by the pixel is at the lowest level detectable by the pixel.

Accordingly, the food in the view maps to a set of pixels (which in some cases is a subset of the total number of pixels of the camera used to acquire the image data). The image parameter values derived from the set of pixels represent a range of lightness levels (e.g., between 0 and 100 in the case of the CIELAB color space) observed in the part of the view that corresponds to food. For example, if the food has a light appearance (e.g., at an early stage of the cooking process), the set of image parameter values may indicate that the relevant pixels detected a relatively light appearance of the food. At a later stage of the cooking process, the food may have a darker appearance due to browning. This means that the set of image parameter values obtained at the later stage may indicate that the relevant pixels detected a relatively darker appearance of the food (e.g., a lower L* value than at the earlier stage of the cooking process).

Thus, the appearance of the food at a particular time during the cooking process is indicated by the set of image parameter values, which represent a range of lightness levels that correspond to the appearance.

In some cases, the dataset may be organized in such a way to facilitate processing of the dataset. For example, the image parameter values may be ordered/ranked in terms of value.

The following section describes further details of the method 100.

The method 100 comprises, at block 104, determining a first value representative of a first subset of the image parameter values. The first subset comprises the image parameter values in the highest sub-range of lightness levels in the range of lightness levels.

The first subset of image parameter values may refer to a specified proportion of the set of image parameter values that are in the highest sub-range of an ordered/ranked set of the lightness levels represented by the set of image parameter values. By way of simplified example, if the dataset includes the following L* values [75, 77, 81, 81, 83, 84, 85, 87, 88, 89, 90, 91, 92, 92, 92, 93], and the specified proportion is 25%, then the highest sub-range includes the L* values [92, 92, 92, 93]. The size of the specified proportion may depend on the implementation, as discussed below.

Block 104 further comprises determining a second value representative of a second subset of the image parameter values. The second subset comprises the image parameter values in a lowest sub-range of lightness levels in the range of lightness levels.

The second subset of image parameter values may refer to a specified proportion of the set of image parameter values that are in the lowered sub-range of an ordered/ranked set of the lightness levels represented by the set of image parameter values. Further to the simplified example referred to above, if the dataset includes the L* values [75, 77, 81, 81, 83, 84, 85, 87, 88, 89, 90, 91, 92, 92, 92, 93], and the specified proportion is 25%, then the lowest sub-range includes the L* values [75, 77, 81, 81]. The size of the specified proportion may depend on the implementation, as discussed below.

The "first value" may refer to a quantity derived from the image parameter values of the first subset that is representative of the appearance of the food registered by a first subset of pixels that map to the food (at the time of image acquisition). The "second value" may refer to a corresponding quantity derived from the image parameter values of the second subset that is representative of the appearance of the food registered by a second subset of pixels that map to (different locations of) the food. In some cases, the quantity may be the average (mean, median or mode) of the image parameter values of the first or second subset, respectively. However, other statistical quantities could be derived from the image parameter values.

A difference parameter may be calculated based on a difference between the first value and the second value. In some cases, the difference parameter refers to the absolute percentage difference between the first and second values (although the difference parameter could be expressed in different ways such as a ratio or fraction). In some cases, the difference parameter value may be the numerical difference between the first value and the second value. In some cases, the first and second values may be referred to as a first and a second difference value, respectively.

If the difference parameter crosses a threshold indicative of the food having a non-uniform surface appearance as a result of the cooking process, this may indicate that the food has such a non-uniform surface appearance (e.g., non-uniform surface browning). Such a threshold may be predetermined for each food type. For example, for each food type, a threshold between acceptable and unacceptable browning non-uniformity may be determined experimentally.

In response to the difference parameter crossing the threshold (i.e., to indicate that the food has an unacceptable non-uniform surface appearance at that time of the cooking process), the method 100 further comprises (at block 106) indicating that a moveable element of the cooking apparatus is to move. The movement of the moveable element is configured to cause redistribution of the food with respect to the moveable element. An example of such a moveable element is described in more detail below.

The force of the movement of the moveable element (which may in some cases support the food on a surface of the moveable element or otherwise be provided in contact with the food in some way) is sufficient to cause the food to redistribute with respect to the moveable element. That is, the food may move in some way such as by being rotated, translated or otherwise shifted from its original position and orientation with respect to the moveable element. In other words, prior to being moved by the moveable element, the food may have a first position and orientation with respect to a reference point (e.g., defined with respect to the surface of the moveable element or another location) of the cooking apparatus. Subsequent to being moved by the moveable element, the food may have a second position and orientation with respect to the reference point.

The redistribution of the food with respect to the moveable element may allow different regions of the food to be moved around such that a region on the food that is cooking at a slower rate than another region on the same food has a chance to be cooked at a faster rate (and vice versa). For example, a first part of the cooking apparatus may have a higher temperature, higher air flow, etc., than a second part of the cooking apparatus. A region on the food that is located in the first part may brown at a faster rate than another region on the food that is located in the second part of the cooking apparatus. By moving the food around, there may be a greater chance that a region of the food that is located in the first part of the cooking apparatus is moved to the second part of the cooking apparatus. Similarly, there may be a greater chance that another region of the food in the second part of the cooking apparatus is moved to the first part of the cooking apparatus. In this way, after the food is redistributed and subsequently undergoes the cooking process, a region of the food with low level of browning may brown more rapidly than another region of the food with a high level of browning. In some cases, the food may be redistributed multiple times during the cooking process. The result may be that all regions of food having a uniform level of browning across the entire surface(s) of the food.

Thus, method 100 and certain other embodiments described herein may provide one or more technical benefits such as described below, and which can be understood with reference to the overall disclosure. Further technical benefits will be apparent from the overall content of this disclosure and with reference to the embodiments described herein.

A technical benefit of the method 100 and/or related embodiments may include the following. Certain embodiments may provide improved monitoring to facilitate a reduction in non-uniformity in terms of browning across the surface of the food during the cooking process. Further, certain embodiments may facilitate enhanced control over the cooking process to reduce non-uniformity in terms of browning. Further, certain embodiments may improve user convenience e.g., by reducing user monitoring and/or intervention during a cooking process. Further, certain embodiments may provide a low computational complexity approach to evaluating food browning.

Embodiments relating to the method 100 are described below.

FIG.2 is a schematic drawing of a cooking ecosystem 200 according to an embodiment. Certain embodiments described herein (e.g., method 100) may be implemented in certain parts of the cooking ecosystem 200. The cooking ecosystem 200 depicts various devices and entities which may be deployed as part of the cooking ecosystem 200. Not every device or entity depicted may be needed in some scenarios, as explained below.

The cooking ecosystem 200 comprises a cooking apparatus 202 for cooking food 204 (which could include a single food item such as a steak, or a plurality of food items such as potato fries). The cooking apparatus 202 comprises a controller 206 for controlling the cooking process. For example, the controller 206 may control a heating element (not shown) of the cooking apparatus 202 (e.g., to control the cooking temperature and/or cooking time of the cooking apparatus 202). The controller 206 is communicatively coupled to a camera 208 for capturing images. The camera 208 is positioned such that a region of interest associated with the food 204 is within a field of view of the camera 208. This particular configuration is an example. For example, the camera 208 may or may not be inside the cooking apparatus 202 but may still have the food 204 within its field of view, even if the camera 208 is external to the cooking apparatus 202.

In some cases, the cooking ecosystem 200 comprises a cloud computing service 210 communicatively coupled to the controller 206. A cloud computing service 210 may provide data storage and/or data processing services. The cloud computing service 210 may provide computing resource where there is insufficient computing resource available in any connected devices. In some cases, the cloud computing service 210 may provide updates and other services for the cooking apparatus 202.

In some cases, the cooking ecosystem 200 comprises a user equipment 212 communicatively coupled to the controller 206. A user equipment 212 may refer to any computing device associated with a user (e.g., of the cooking apparatus 202). Examples of user equipment 212 include: a smartphone, smartwatch, tablet, Internet of Things (IoT) device, etc. In some cases, the user equipment 212 may be communicatively coupled to the cloud computing service 210.

In some cases, the user equipment 212 may comprise an interface (not shown) to facilitate user interaction with the user equipment 212.

In some cases, the cooking apparatus 202 may comprise an interface (not shown) to facilitate user interaction with the cooking apparatus 202.

Examples of such an interface may include an output device that provides visual information (e.g., a display) and/or audible information (e.g., a speaker) e.g., for the user. Further examples of such an interface may include an input device (e.g., a camera, microphone, touch-sensitive component such as a touchscreen, button, etc.) that allows the user to input instructions to control the cooking apparatus 202. In some cases, a user interface may facilitate user control of the user equipment 212 and/or cooking apparatus 202 via user input to the interface e.g., by virtue of the user touching an interface such as touch-sensitive component or by virtue of the user speaking, gesturing or otherwise indicating a control instruction that can be detected by an interface such as a camera or microphone.

Any one or combination of the controller 206, cloud computing service 210 and the user equipment 212 may be used to implement the method 100 and other embodiments described herein. For example, in some cases, the controller 206 may implement the method 100 and related embodiments. In this regard, the controller 206 may comprise a processor (not shown) for implementing the method 100 and related embodiments. In other cases, processing circuitry associated with the various devices and entities of the cooking ecosystem 200 may implement the method 100 and related embodiments.

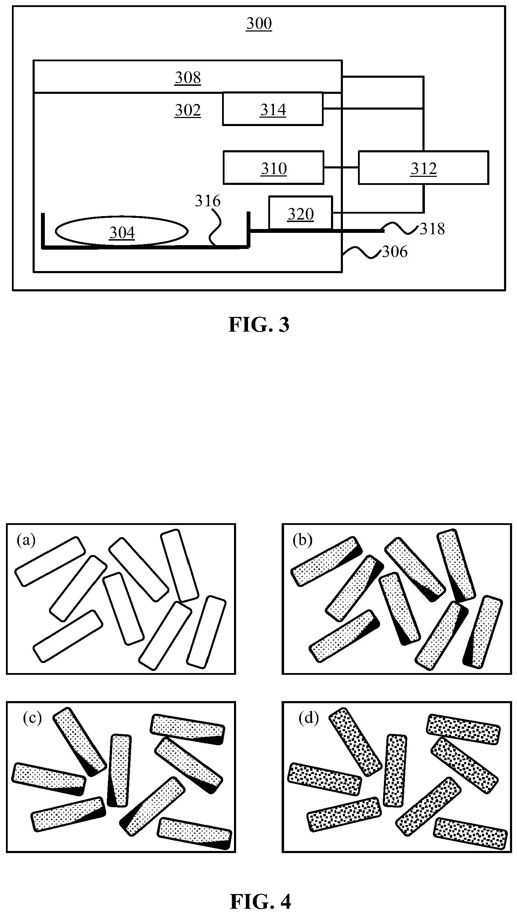

FIG. 3 is a schematic drawing of a cooking apparatus 300 for implementing a cooking process according to an embodiment. The cooking apparatus 300 may implement the functionality of certain embodiments described herein such as described in relation to the method 100 of FIG. 1. Certain features of the cooking apparatus 300 may correspond to or have similar functionality to features of the cooking apparatus 202 of FIG. 2.

The cooking apparatus 300 comprises a cooking chamber 302 for receiving food 304. The cooking apparatus 300 further comprises a housing 306 defining the cooking chamber 302. The cooking apparatus 300 further comprises an air circulation system 308 for circulating air flow inside the cooking chamber 302. Therefore, in this regard, the cooking apparatus 300 may have a similar form to a fan oven or an air fryer. The cooking apparatus 300 further comprises a camera 310 for capturing images (of the "view" associated with the food 304) during the cooking process. The captured images may correspond to or be used to derive the first and second image data.

The cooking apparatus 300 further comprises a controller 312 such as corresponding to the controller 206 of FIG. 2. In this embodiment, the controller 312 is configured to implement the method 100. In further embodiments, the controller 312 is configured to implement embodiments related to the method 100.

The cooking apparatus 300 further comprises a light 314 to illuminate the food 304. The light 314 may be powered on and off by the controller 312. Some embodiments may not include such a light 314 (e.g., if there is sufficient ambient light available and/or the camera 310 is sufficiently sensitive). The light 314 may comprise a light emitting diode (LED), halogen tungsten lamp, etc. The light 314 is mounted in an upper region of the cooking chamber 302 but could be positioned elsewhere. In some cases, there may be a plurality of lights 314. Such lights 314 may be positioned appropriately for generating uniform illumination directed towards the food 304. The camera 310 may be positioned appropriately so that it has the food 304 within its field of view and so that the illumination provided by the light 314 provides an appropriate level of illumination for the camera 310 to image the food 304.

The cooking apparatus 300 further comprises a moveable element 316 (such as a baking tray, basket, paddle or other device that can apply a force with respect to the food 304 to cause movement thereof). In this case, the moveable element 316 is configured to support the food 304 on the surface of the moveable element 316. The cooking apparatus 300 further comprises a handle 318, which is coupled to the moveable element 316. A user can use the handle 318 to remove the moveable element 316 from the cooking apparatus 300 and apply a force to the moveable element 316 sufficient to cause the food 304 to be redistributed. For example, the user may shake the moveable element 316.

The cooking apparatus 300 further comprises an interlock 320 configured to detect the position of the moveable element 316. If the user removes the moveable element 316, the interlock 320 detects the removal and causes the cooking apparatus 300 to stop generating heat and/or circulating air flow. Similarly, if the moveable element 316 is replaced, the interlock 320 detects the replacement and restarts to generate heat and/or circulate air flow to continue the cooking process. The interlock 320 is communicatively coupled to the controller 312 in order to facilitate such control of heat generation and air flow circulation. In some embodiments, such an interlock 320 may not be needed.

In some embodiments, the cooking apparatus 300 is configured to allow a user to cause movement of the moveable element 316 to cause redistribution of the food 304 with respect to the moveable element 316. Indicating that the moveable element is to move may comprise generating an indication for an interface for use by the user. The indication may allow the user to determine whether to cause movement the moveable element 316.

For example, an interface (e.g., of the cooking apparatus 300 itself or of a user equipment 212) may receive the indication (which was generated by the processor implementing the method according to an embodiment). The user may then determine whether to cause movement of the moveable element 316 based on the indication. Such an indication may be considered to be a recommendation for the user to move the moveable element 316. The user may decide to accept or ignore the indication that the moveable element 316 is to move. This decision may be based on their own personal preference or experience.

In order to cause movement of the moveable element 316, the user may take appropriate action depending on the configuration of the cooking apparatus 300.

In some embodiments, the cooking apparatus 300 is configured to move the moveable element 316 to cause redistribution of the food 304 with respect to the moveable element 316. For example, a powered actuator (not shown) such as an electric motor may be a part of the cooking apparatus 300 that can be controlled by the controller 312. Such a powered actuator may be configured to apply force on the moveable element 316 to cause redistribution of the food 304 with respect to the moveable element 316. Indicating that the moveable element is to move may comprise causing the cooking apparatus 300 to move the moveable element 316 (e.g., by instructing the powered actuator to move the moveable element 316 as needed).

In some embodiments, the food 304 is supported on a surface of the moveable element 316. Movement of the moveable element 316 causes the food 304 to move about (e.g., shift position and/or orientation) on the surface.

In some embodiments, the cooking apparatus 300 is a consumer cooking apparatus. A consumer may purchase such a cooking apparatus 300 to use in their home.

In the case of implementing the method 100, the controller 312 is configured to monitor the cooking process by implementing blocks 102, 104 and 106 of the method 100 and/or related embodiments.

Although FIG. 3 describes that the controller 312 of the cooking apparatus 300 implements the method 100, in some cases, other devices or entities (such as depicted by FIG. 2) may implement at least some of the functionality of the method 100 (and related embodiments).

FIG. 4 is a schematic representation of a set of images (a) to (d) of food that has been cooked to various degrees in accordance with embodiment described herein. The images may correspond to the view of the food referred to above.

In image (a), the food (in this case, potato fries) is randomly distributed on the surface and has not been cooked.

In image (b), the food has been partially cooked. Although the food has browned somewhat (as represented by the light shading), certain food regions (as depicted by the black regions) have cooked more than other food regions. The distinction between the light shaded region and the black region on the food is such that the threshold for non-uniformity has been crossed. As a result, the food is to be redistributed on the surface of the moveable element.

In image (c), the food has been redistributed as a result of the browning non-uniformity.

In image (d), the food has been cooked to a consumer-specified level of browning (as represented by the darker shading). Since the food was redistributed before too much browning occurred in certain food regions, the surface appearance of the food has a substantially uniform level of browning across the surface. Thus, the automatic redistribution of the food on the moveable element when the threshold is crossed may prevent too much browning of certain regions of the food.

At present, consumers may judge food doneness level by observing food surface color. Consumers may evaluate the degree of non-uniform browning level by visually judging and comparing the lightest and darkest regions of food during cooking to determine the color difference. This is an effective technique because the surface color signal correlates well with food doneness level for many food types, such as frozen French fries, fish fillet, toast slices, belly pork slices, etc. Embodiments described herein may provide a more convenient approach to detect non-uniform browning during cooking. Accordingly, consumers may not need to be concerned about when exactly they should pause the cooking apparatus to redistribute the food to prevent non-uniform browning. Certain embodiments described herein may provide the user with improved information regarding when to redistribute the food to reduce non-uniform browning (i.e., to facilitate more uniform browning). For example, non-uniform browning may be readily detected, thereby providing improved information for the user to make a better informed decision about when to cause the food to be redistributed. The burden on the user may be reduced because they can be less concerned with visually checking the status of the food browning level.

The detected lightness (or brightness or intensity) of the food regions may influence the implementation of embodiments described herein. For example, since the L channel value in the CIELAB color space is relevant with the lightness of an individual color, certain embodiments may involve extracting the L channel values derived from the captured RGB values of the pixels. Such an approach may involve real-time food image analysis to determine food browning level. A lighter color means a lighter browning level, irrespective of color types. For example, bakery foods usually have yellow and brown colors. Hence, the lightness of a brown color relates to food browning level very well. Many vegetables have a green color. Hence, a lighter and darker green color represents a lighter and darker browning level, respectively. After obtaining the L values of the pixels of a food image, certain embodiments described herein may measure non-uniform browning by calculating the absolute percentage difference in the L values of two subsets of pixels with the darkest and lightest L values, respectively. To let the calculated difference represent the non-uniform browning perceived by human eye under ambient light as much as possible, the L* values may be obtained through color calibration from the RGB color space to the standard CIELAB color space of ambient light environment.

Some embodiments relating to the above are now described.

In some embodiments, the first subset comprises one or more image parameter values derived from a first subset of pixels that map to the food. The second subset comprises one or more image parameter values derived from a second subset of pixels that map to the food.

In some embodiments, the difference parameter is based on an absolute difference between the first value and the second value. The absolute difference may be based on a ratio of the difference between the first value and the second value to the first value.

In some embodiments, the difference parameter is the absolute percentage difference. It is noted that the "second value" refers to a darker region than the "first value". Thus, in terms of the (e.g. average) L-value for the first subset and the second subset, the L* value for the first subset is higher than the L* value for the second subset. The absolute percentage difference may be calculated as (first value minus second value)/first value. In some embodiments, the first subset may refer to the parts of the food that map to pixels that register a relatively light appearance. The second subset may refer to the parts of the food that map to pixels that register a relatively darker appearance (than the first subset).

In some embodiments, the difference parameter is calculated by subtracting a reference difference from the absolute difference derived from the dataset. The reference difference is the absolute difference derived from a reference dataset indicative of the appearance of the food at an earlier time of the cooking process.

In some embodiments, the earlier time is a predefined time period after the start of the cooking process. The predefined time period may be based on the type of food and/or cooking temperature implemented by the cooking apparatus.

In some embodiments, the set of image parameter values comprise a set of coordinates of a color space. The set of coordinates comprises one or more coordinate components (where a coordinate component may refer to e.g., the L*-axis, a*-axis and b*-axis of the CIELAB color space). The set of coordinates comprises a coordinate component representative of the lightness level, for example, the L*-axis of the CIELAB color space.

In some embodiments, the first subset comprises fewer than 25 percent of a total number of the image parameter values in the set of image parameter values (i.e., derived from the set of pixels that that map to the food). The second subset comprises fewer than 25 percent of the total number. Thus, the total number of image parameter values refers to the number of pixels that map to the food. The first subset refers to the pixels (that registered the lightness levels in the highest sub-range) that correspond to fewer than 25 percent of the total number. The second subset refers to the pixels (that registered the lightness levels in the lowest sub-range) that correspond to fewer than 25 percent of the total number. Thus, in total, fewer than 50 percent of the total number of pixels that map to the food may be used in order to determine the first and second values.

In some embodiments, the first value is based on an average value for the image parameter values in the first subset. Further, the second value is based on an average value for the image parameter values in the second subset. The average could refer to the mean, mode or median. That is, the first value may be calculated by determining the average image parameter value of the image parameter values in the first subset. Further, the second value may be calculated by determining the average image parameter value of the image parameter values in the second subset.

In some embodiments, the image parameter values are derived from pixel intensity values registered in a region of interest segmented from the image data. The region of interest comprises pixels that map to the food visible in the view. Segmentation may be performed on the image data in order to identify the set of pixels (i.e., the region of interest) that map to the food. Segmentation may be performed in various ways such as by using Otsu's thresholding technique. Segmentation techniques may include artificial intelligence (AI) techniques and non-AI techniques.

In some embodiments, the method comprises removing one or more image parameter values from the set of image parameter values to be used to determine the first and second values. The one or more image parameter values are removed based on a criterion indicative that the one or more image parameter values to be removed are anomalous with respect to other image parameter values in the set. This may be useful where certain image parameter values do not provide useful information for the determination of the first or second values. For example, some pixels may register very high lightness levels (such as reflected light from a shiny surface of the food). By setting the criterion appropriately, the image parameter values for such pixels may be removed from the set of image parameter values. In this manner, a more accurate determination of the first and second values may be made, based on pixels that provide an accurate representation of the lightness levels.

In some embodiments, the criterion is one or more image parameter values having a lightness level above or below a threshold is to be removed.

In some embodiments, the criterion is one or more image parameter values having one or more color space values above or below a threshold is to be removed.

For example, the threshold(s) could be defined within the image parameter value range. An upper threshold may be set to remove image parameter values that are too light (for example, a threshold of 95 may be defined for L* values so that L* values of 96 to 100 are removed from the set of image parameter values) or go beyond a certain color (e.g., an a* and/or b* value or other color space value above a predefined threshold is removed from the set of image parameter values). A lower threshold may be set to remove image parameter values that are too dark (for example, a threshold of 5 may be defined for L* values so that L* values of 0 to 4 are removed from the set of image parameter values) or go beyond a certain color (e.g., an a* and/or b* value or other color space value below a predefined threshold is removed from the set of image parameter values). The thresholds may be determined based experimentation. In some cases, the thresholds may be defined based on the food type.

In some embodiments, the criterion is one or more image parameter values in an ordered sequence of the set of image parameter values having a lightness level that increases or decreases by a specified value or factor compared with an adjacent image parameter value in the ordered sequence is to be removed.

In some embodiments, the criterion is one or more image parameter values in an ordered sequence of the set of image parameter values having one or more color space values that increases or decreases by a specified value or factor compared with an adjacent image parameter value in the ordered sequence is to be removed.

For example, an abrupt change in image parameter value between adjacent (consecutive) image parameter values in an ordered sequence of image parameter values may indicate a potential error with the image parameter value. If the change increases or decreases by the specified value or factor, the image parameter value may be removed. For example, suppose the ordered set of image parameter values in the set has the following lightness (or color) values [88, ..., 88, 89, ..., 89, 90, ... 90, 95...] there is an abrupt change of lightness (or color) value from 90 to 95. If the threshold is set as a change of 5 or more, the image parameter values in the ordered sequence from 95 onwards are to be removed from the set of image parameter values. Rather than specifying an explicit number (such as a change of 5 or more), a factor may be specified such as a 5 percent change. The change from 90 to 95 is a 5.6 percent change and therefore the image parameter values in the ordered sequence from 95 onwards are to be removed from the set of image parameter values. Thus, certain pixels that correspond could lead to errors since they do not accurately represent the appearance of the food may be excluded. This pixel removal approach may help remove any pixels not removed by the segmentation procedure.

In some embodiments, the set of image parameter values are derived from modified image data obtained by performing image correction on the image data to reduce color distortion and/or lighting non-uniformity apparent in the image data.

Some further potential implementation details are described below.

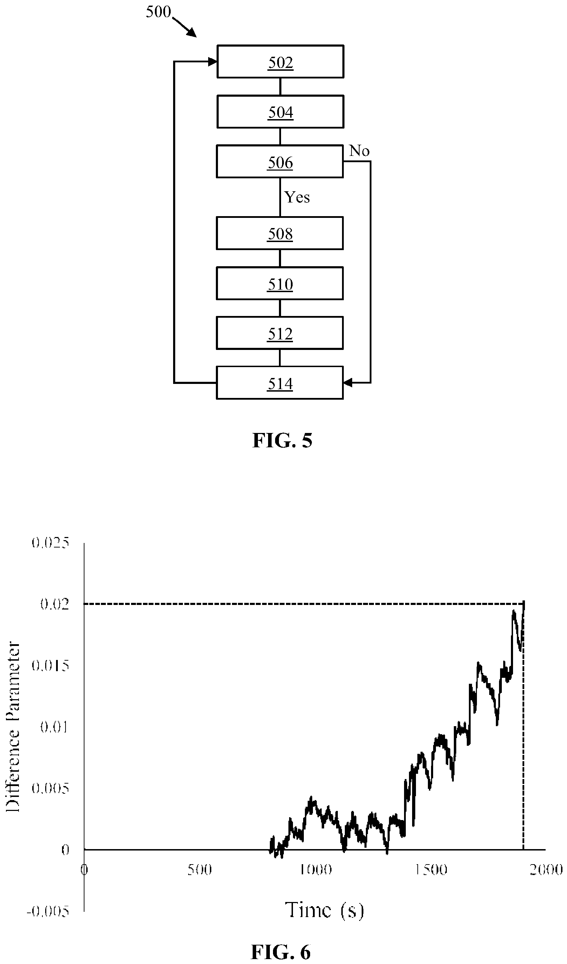

FIG. 5 refers to a method 500 of monitoring a cooking process implemented by a cooking apparatus (such as the cooking apparatus 300) according to some embodiments. The method 500 may be implemented by, for example, a processor of the cooking apparatus 300 or another entity, as described above. Blocks of the method 500 are outlined below. Certain blocks may be omitted (in accordance with certain embodiments) or performed in a different order to the order depicted.

At block 502 of the method 500, image acquisition is performed to obtain the image data used in the methods described herein. Images may be acquired repeatedly during the cooking process. In some cases, the image acquisition may be performed periodically (e.g., at regular intervals) during the cooking process.

In some embodiments, at block 504 of the method 500, image correction and/or image preparation may be performed on the acquired images (if needed). Various types of image correction may be performed such as grayscale correction and/or color correction. Image preparation may involve selecting one or more regions of interest of the image data that map to food (e.g., by using segmentation).

In some embodiments, the L*-values of the CIELAB values of the pixels in the part of the image data may be obtained in order to facilitate browning level control. However, some cooking apparatus 300 may have non-uniform illumination (e.g., due to the design of the lighting in the cooking apparatus and any ambient lighting) and/or color distortions.

Grayscale correction may be performed to reduce the lightness non-uniformity (caused by non-uniform illumination). This may involve detecting RGB values on a neutral card imaged by the camera with respect to a reference point in the image. In some embodiments, for a pixel in region, an offset may be calculated with respect to the reference point. The offset may be used to generate a linear transformation function that transforms the pixel intensity values for each pixel to correct for lightness non-uniformity.

In some cases, the image correction and/or image preparation obtained at block 504 may be applied to any subsequently acquired images (e.g., at block 508). If the food is redistributed, segmentation may need to be performed again. The image correction may or may not need to be performed again, if indeed it was needed in the first place.

Further, some cooking apparatus 300 may have non-ideal color imaging meaning that color correction may be needed for removing the color distortion of the imaging system. In some embodiments, the color correction may be conducted using a polynomial or neural network model to transform the color values to correct for color distortion in the image. The grayscale correction may be implemented (if needed) prior to implementing the color correction.

In some embodiments, a region of interest may be identified in the image. The region of interest may correspond to a subset of pixels of the set of pixels that form the overall image. The region of interest may comprise food and non-food regions. Thus, some of the pixels in the region of interest may map to food in the view (i.e., food pixels) and other pixels in the region of interest may not map to food in view (i.e., non-food pixels such as the background to the food). In some embodiments, the region of interest is predefined for the view (e.g., based on manufacturer knowledge of where food is likely to be positioned within the view). In some embodiments, the region of interest is manually selected by the user, e.g., via a user interface such as a graphical user interface (not shown). In some embodiments, the user may select a sub-region of interest from the pre-defined region of interest (e.g., to focus monitoring for non-uniform browning only in the sub-region).

In some embodiments, segmentation may be performed on an acquired image (or, in some cases, on a region of interest as discussed above) in order to identify pixels (i.e., "food pixels") in the image that map to one or more locations of food in the view. In some embodiments, the segmentation employs grayscale thresholding where the threshold is determined by the Otsu method or another appropriate method. Thus, the part of the image that maps to the food can be distinguished from the part of the image that maps to non-food regions (such as the components of the cooking apparatus visible in the view that are not covered by food). The segmentation may indicate which pixels of the image data should be used in order to perform the non-uniform browning level detection according to embodiments described herein.

After blocks 502 and 504 of the method 500 are performed, non-uniform browning level detection according to certain embodiments described herein is performed. It has been found by experimentation that the non-uniformity in browning level starts increasing significantly after some time of cooking. Hence, a delay may be specified to indicate a start time for initiating the non-uniform browning detection according to embodiments described herein. The delay may be a predefined time period depending on food condition (for example, if the food is frozen, the delay may be longer than if the food is fresh). Thus, a timer may be implemented at block 506 of the method 500 so that subsequent steps of the method 500 are implemented after the predefined time period. For example, the food may not usually brown significantly during the predefined time period after the start of the cooking process. Further, if the user has redistributed the food during the cooking process, a certain amount of time according to the timer may need to pass after the user redistributed the food. Use of such a timer may avoid food being redistributed unnecessarily often during the cooking process. The following blocks are executed after the delay.

At block 506 of the method 500, a check is made to determine if non-uniform browning detection needs to be implemented (e.g., providing the predefined time period has elapsed). For example, a consumer may have already manually redistributed the food prior to the start time for initiating non-uniform browning detection. In some cases, certain foods may typically brown in a uniform manner and therefore there may be no need for non-uniform browning detection to be initiated.

If no (non-uniform browning detection does not need to be implemented), the method 500 proceeds to block 514 where other processes may be implemented. For example, other types of cooking monitoring or process control may be implemented, or certain blocks of the method 500 may need to be repeated. Such other types of cooking process control may include browning level control and/or other types of control for controlling the cooking apparatus and/or the cooking process.

If yes (non-uniform browning detection is to be implemented), the method 500 proceeds to block 508. At block 508, if a condition is satisfied, image data is acquired and used as follows. the first value is calculated from a first subset of the image parameter values of the set that map to the food. Further, the second value is calculated from a second subset of the image parameter values of the set that map to the food. The first value may be the average of the image parameter values in the first subset. Similarly, the second value may be the average of the image parameter values in the second subset.

The condition may be whether a predefined time period has elapsed. If yes, the condition is satisfied. The predefined time period may be based on one or more factors such as the type of food, amount of food being cooked, the cooking temperature and/or the initial temperature state (e.g., frozen or fresh) of the food. It may not be necessary to start the non-uniform browning detection for some time after initiation of the cooking process because it is not expected that browning is to be significant within the predefined time period. Delaying the start of non-uniform browning detection may reduce overall use of compute resources during the cooking process.

In experiments, the proportion in the first subset is selected as 10 percent of the overall number of image parameter values that map to the food. Similarly, the proportion in the second subset is selected 10 percent of the overall number of image parameter values that map to the food. Thus, in total, 20 percent of the overall number of image parameter values are selected for calculating the difference parameter. In the experiments, the image parameter values in the set that map to the food were ordered/ranked in terms of value (e.g., from lightest to darkest). The first subset was selected as the 10 percent lightest image parameter values (i.e., 10 percent of the pixels that recorded the highest L*-values). The second subset was selected as the 10 percent darkest image parameter values (i.e., 10 percent of the pixels that recorded the lowest L*-values). The choice to use 10 percent at each end of the scale was found to provide acceptable results. However, other percentages may be used such as less than 25 percent.

After the first and second values have been calculated, the method 500 proceeds to block 510. At block 510, if the condition described in relation to block 508 is satisfied, the absolute value of the percentage difference between the first and second values is calculated. If it is the moment of starting to detect non-uniform browning level, the calculated percentage difference (based on the first acquired image) is the initial value for the percentage difference. For the images acquired after the first acquired image, this initial value is subtracted from the absolute percent difference (calculated from each subsequently acquired image). The subtracted absolute percent difference is used to represent the real-time non-uniformity in browning level. In this case, the difference parameter is based on the absolute difference between the first value and the second value, minus the initial value for the absolute difference. This can be represented as follows:

$$\text{difference parameter(i)} = ((\text{first value(i)} - \text{second value(i)})/\text{first value(i)}) - ((\text{first value(0)} - \text{second value(0)})/\text{first value(0)}),$$

where difference parameter(i) refers to the difference parameter of the i-th image data (or frame) acquired after the start of the non-unforming browning detection, first value(i)/second value(i) refers to the first/second values respectively calculated from the i-th image data acquired after the start of non-uniform browning detection, and first value(0)/second value(0) refers to the first/second values respectively calculated from the initial (zeroth) image data acquired at the start of non-uniform browning detection.

At each calculation of the difference parameter after the initial value is calculated, the method 500 implements block 512. At block 512, the difference parameter is compared with a (pre-set) threshold indicative of the food having a non-uniform surface appearance as a result of the cooking process. If the difference parameter is larger than the threshold, the method 500 indicates that a moveable element of the cooking apparatus 300 is to move to cause redistribution of the food 304 with respect to the moveable element 316, as described above.

Once the food has been redistributed, the method 500 proceeds to block 514 where other cooking monitoring/controlling operations may be performed. In some cases, the method 500 implemented by one or more of blocks 502 to 512 may be repeated (e.g., after a predefined time period has elapsed). For example, some foods may need to be redistributed multiple times during the cooking process to ensure uniform browning.

An experimental study that implemented certain embodiments described herein is now described.

FIG. 6 is a graph depicting experimental data (of air frying frozen potato fries) providing a difference parameter according to an embodiment. The graph indicates time on the x-axis and difference parameter on the y-axis. The difference parameter is calculated using the expression described in relation to block 510. The predefined time period is set as 800 seconds. The time period of 800 seconds to start the non-uniform browning detection process was selected because it had been found that the significant ascending of the non-uniform browning (as represented by the difference parameter) usually happened after this time period. After 800 seconds, the difference parameter signal shows an ascending trend, which means that the lightness difference between the lightest and darkest pixels was becoming larger and larger. Upon the difference parameter signal crossing the (pre-set) threshold of 0.02 at - 1905 seconds, the indication that the moveable element (i.e., the basket of the air fryer) was to be moved was triggered, as depicted by the dashed lines in Fig. 6. At this moment in time, it was observed that there was non-uniform browning (similar to that depicted by Fig. 4(b)). Hence, the fries were redistributed by shaking the basket (similar to that depicted by Fig. 4(c)) and the cooking process was continued. The fries were found to have a relatively uniform browning level (similar to that depicted by Fig. 4(d)) after about 53 minutes of cooking. In a comparison experiment, no basket shaking was performed. In that case, the result was significant levels of non-uniform browning.

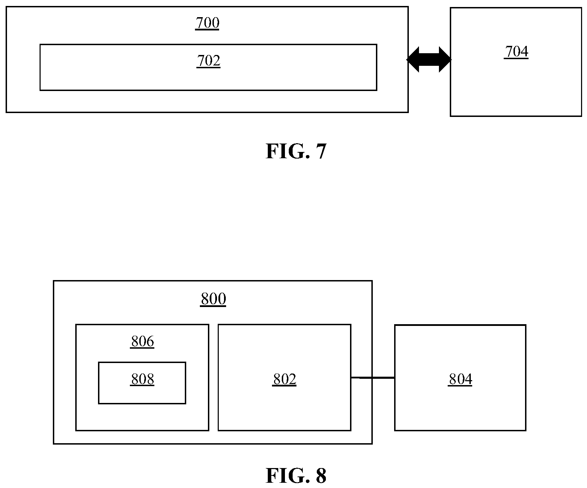

FIG. 7 is a schematic drawing of a non-transitory machine-readable medium 700 for implementing various embodiments described herein. As used herein, the term "non-transitory" does not encompass transitory propagating signals. The machine-readable medium 700 stores instructions 702 readable and executable by a processor 704 to implement the method of any of the embodiments described herein (e.g., method 100 and/or related embodiments). The machine-readable medium 700 and/or the processor 704 may be implemented by any of the controller 206, cloud computing service 210, user equipment 212 and/or controller 312 of Figures 2 or 3.

FIG. 8 is a schematic drawing of apparatus 800 for implementing various embodiments described herein. The apparatus 800 may be implemented by any of the controller 206, cloud computing service 210, user equipment 212 and/or controller 312 of Figures 2 or 3.

The apparatus 800 comprises a processor 802. The processor 802 is configured to communicate with an interface 804. The interface 804 may be any interface (wireless or wired) implementing a communications protocol to facilitate exchange of data (e.g., image data, cooking apparatus control instructions, etc.) with other devices such as another part of the cooking ecosystem 200.

The apparatus 800 further comprises a memory 806 (e.g., non-transitory or otherwise) storing instructions 808 readable and executable by the processor 802 to implement various embodiments described herein (e.g., method 100 or any of the associated embodiments).

Any of the models described herein may be implemented by the processing circuitry for implementing the methods described herein. Thus, certain blocks of the methods may involve use of such models in order to provide the stated functionality. The models may be (machine learning) ML-based or non-ML-based (where ML is an artificial intelligence (AI) technique). However, certain embodiments described herein refer to use of non-ML-based models, which may avoid the need to use extensive compute resources and/or enable local processing.

While the invention has been illustrated and described in detail in the drawings and foregoing description, such illustration and description are to be considered illustrative or exemplary and not restrictive; the invention is not limited to the disclosed embodiments.

One or more features described in one embodiment may be combined with or replace features described in another embodiment.

Embodiments in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, flash storage, etc.) having computer readable program codes therein or thereon.

The present disclosure is described with reference to flow charts and block diagrams of the method, devices, and systems according to embodiments of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine-readable instructions.

The machine-readable instructions may, for example, be executed by a general-purpose computer, a special purpose computer, an embedded processor, or processors of other programmable data processing devices to realize the functions described in the description and diagrams. In particular, a processor or processing circuitry, or a module thereof, may execute the machine-readable instructions. Thus, functional modules of apparatus and other devices described herein may be implemented by a processor executing machine-readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the embodiments of the present disclosure.

Elements or steps described in relation to one embodiment may be combined with or replaced by elements or steps described in relation to another embodiment. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A computer-implemented method (100) of monitoring a cooking process implemented by a cooking apparatus, the method comprising:

   receiving (102) a dataset indicative of an appearance of food undergoing the cooking process, wherein the dataset is derived from image data corresponding to a view of the food undergoing the cooking process, wherein the food in the view maps to a set of pixels in the image data, and wherein a set of image parameter values derived from the set of pixels represent a range of lightness levels;
   determining (104):

      a first value representative of a first subset of the image parameter values, wherein the first subset comprises the image parameter values in a highest sub-range of lightness levels in the range of lightness levels; and

a second value representative of a second subset of the image parameter values, wherein the second subset comprises the image parameter values in a lowest sub-range of lightness levels in the range of lightness levels; and

in response to a difference parameter calculated based on a difference between the first value and the second value crossing a threshold indicative of the food having a non-uniform surface appearance as a result of the cooking process, indicating (106) that a moveable element of the cooking apparatus is to move to cause redistribution of the food with respect to the moveable element.

2. The computer-implemented method of claim 1, wherein the cooking apparatus is configured to allow a user to cause movement of the moveable element to cause redistribution of the food with respect to the moveable element, wherein indicating that the moveable element is to move comprises generating an indication for an interface for use by the user, and wherein the indication is to allow the user to determine whether to cause movement the moveable element.

3. The computer-implemented method of claim 1, wherein the cooking apparatus is configured to move the moveable element to cause redistribution of the food with respect to the moveable element, and wherein indicating that the moveable element is to move comprises causing the cooking apparatus to move the moveable element.

4. The computer-implemented method of any one of claims 1-3, wherein the food is supported on a surface of the moveable element, and wherein movement of the moveable element causes the food to move about on the surface.

5. The computer-implemented method of any one of claims 1-4, wherein the first subset comprises one or more image parameter values derived from a first subset of pixels that map to the food, and wherein the second subset comprises one or more image parameter values derived from a second subset of pixels that map to the food.

6. The computer-implemented method of any one of claims 1-5, wherein the difference parameter is based on an absolute difference between the first value and the second value.

7. The computer-implemented method of any one of claims 1-6, wherein the set of image parameter values comprise a set of coordinates of a color space, wherein the set of coordinates comprises one or more coordinate components, and wherein the set of coordinates comprises a coordinate component representative of the lightness level.

8. The computer-implemented method of any one of claims 1-7, wherein the first subset comprises fewer than 25 percent of a total number of the image parameter values in the set of image parameter values, and wherein the second subset comprises fewer than 25 percent of the total number.

9. The computer-implemented method of any one of claims 1-8, wherein the first value is based on an average value for the image parameter values in the first subset, and wherein the second value is based on an average value for the image parameter values in the second subset.

10. The computer-implemented method of any one of claims 1-9, wherein the image parameter values are derived from pixel intensity values registered in a region of interest segmented from the image data, and wherein the region of interest comprises pixels that map to the food visible in the view.

11. The computer-implemented method of any one of claims 1-10, comprising removing one or more image parameter values from the set of image parameter values to be used to determine the first and second values, wherein the one or more image parameter values are removed based on a criterion indicative that the one or more image parameter values to be removed are anomalous with respect to other image parameter values in the set.

12. The computer-implemented method of claim 11, wherein the criterion is one or more of:

one or more image parameter values having a lightness level above or below a threshold is to be removed;
one or more image parameter values in an ordered sequence of the set of image parameter values having a lightness level that increases or decreases by a specified value or factor compared with an adjacent image parameter value in the ordered sequence is to be removed;
one or more image parameter values having one or more color space values above or below a threshold is to be removed;
one or more image parameter values in an ordered sequence of the set of image parameter values having one or more color space values that increases or decreases by a specified value or factor compared with an adjacent image parameter value in the ordered sequence is to be removed.

13. The computer-implemented method of any one of claims 1-12, wherein the set of image parameter values are derived from modified image data obtained by performing image correction on the image data to reduce color distortion and/or lighting non-uniformity apparent in the image data.

14. A non-transitory machine-readable medium (700) storing instructions (702) readable and executable by a processor (704) to implement the method of any one of claims 1 to 13.

15. A cooking apparatus (300) for implementing a cooking process, comprising:

a cooking chamber (302) for receiving food (304);
a housing (306) defining the cooking chamber;
an air circulation system (308) for circulating air flow inside the cooking chamber;
a camera (310) for capturing images during the cooking process;
a moveable element (316) for moving the food; and
a controller (312) configured to:

receive (102) a dataset indicative of an appearance of food undergoing the cooking process, wherein the dataset is derived from image data corresponding to a view of the food undergoing the cooking process, wherein the food in the view maps to a set of pixels in the image data, and wherein a set of image parameter values derived from the set of pixels represent a range of lightness levels;
determine (104):

a first value representative of a first subset of the image parameter values, wherein the first subset comprises the image parameter values in a highest sub-range of lightness levels in the range of lightness levels; and
a second value representative of a second subset of the image parameter values, wherein the second subset comprises the image parameter values in a lowest sub-range of lightness levels in the range of lightness levels; and

in response to a difference parameter calculated based on a difference between the first value and the second value crossing a threshold indicative of the food having a non-uniform surface appearance as a result of the cooking process, indicate (106) that a moveable element of the cooking apparatus is to move to cause redistribution of the food with respect to the moveable element.

100

| 102 |
|---|

| 104 |
|---|

| 106 |
|---|

**FIG. 1**

200

| 202 |
|---|
| | 208 | | 206 | |
| | | 204 | | |

| 210 |
|---|

| 212 |
|---|

**FIG. 2**

**FIG. 3**

**FIG. 4**

500

502

504

506 — No

Yes

508

510

512

514

**FIG. 5**

**FIG. 6**

700

702

704

**FIG. 7**

800

806

808

802

804

**FIG. 8**

Europäisches
Patentamt

European
Patent Office

Office européen
des brevets

# EUROPEAN SEARCH REPORT

Application Number

EP 23 18 2058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/197596 A1 (KONINKLIJKE PHILIPS NV [NL]) 1 November 2018 (2018-11-01) * pages 12-13; figures 1-5,8 * ----- | 1-15 | INV. F24C7/08 A47J37/06 F24C15/16 |

TECHNICAL FIELDS
SEARCHED (IPC)

F24C
A47J

The present search report has been drawn up for all claims

| Place of search | Date of completion of the search | Examiner |
|---|---|---|
| The Hague | 17 November 2023 | Meyers, Jerry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 18 2058

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2023

| Patent document cited in search report | Publication date | Patent family member(s) | | Publication date |
|---|---|---|---|---|
| WO 2018197596 A1 | 01-11-2018 | CN | 212159540 U | 15-12-2020 |
| | | WO | 2018197596 A1 | 01-11-2018 |

For more details about this annex : see Official Journal of the European Patent Office, No. 12/82

EPO FORM P0459